**Europäisches Patentamt**

**European Patent Office**

**Office européen des brevets**

(11) Numéro de publication: **0 266 254 B1**

# FASCICULE DE BREVET EUROPEEN

(12)

(45) Date de publication de fascicule du brevet: **10.06.92**  (51) Int. Cl.⁵: **H02H 7/08**

(21) Numéro de dépôt: **87402294.0**

(22) Date de dépôt: **14.10.87**

(54) **Dispositif de surveillance de moteur électrique.**

(30) Priorité: **15.10.86 FR 8614301**

(43) Date de publication de la demande:
**04.05.88 Bulletin 88/18**

(45) Mention de la délivrance du brevet:
**10.06.92 Bulletin 92/24**

(84) Etats contractants désignés:
**BE DE ES GB IT NL**

(56) Documents cités:
**DE-B- 1 107 338**
**DE-B- 1 285 607**
**FR-A- 2 330 179**

(73) Titulaire: **POMPES SALMSON Société Anony-me à directoire dite:**
**44 Avenue de Chatou Tour Corosa**
**F-92500 Rueil Malmaison(FR)**

(72) Inventeur: **Kernous, Michel**
**Le Haut Ecottay Mondevert**
**F-35370 Argentre du Plessis(FR)**
Inventeur: **Pottier, Xavier**
**La Jarrière Montigne le Brillant**
**F-53260 Entrammes(FR)**

(74) Mandataire: **Hirsch, Marc-Roger**
**Cabinet Hirsch 34 rue de Bassano**
**F-75008 Paris(FR)**

Rank Xerox (UK) Business Services

## Description

La présente invention concerne un dispositif de télésurveillance du fonctionnement d'un moteur électrique, par exemple pour un groupe motopompe, comportant au moins un détecteur de la température du bobinage de ce moteur apte, en cas de dépassement par au moins une partie de ce bobinage d'une température prédéterminée, à déclencher la mise hors tension de ce moteur, le détecteur de température étant relié, par prélèvement d'une tension du moteur, à un organe de surveillance.

De tels dispositifs de surveillance sont bien connus et utilisés dans les installations fonctionnant automatiquement et en continu pendant de longues périodes. Le déclenchement du détecteur de température émet un signal d'alerte et est en général couplé à un système d'arrêt qui coupe la tension d'alimentation du moteur électrique lorsque la température des bobinages de ce dernier est trop élevée, en protégeant ainsi les bobinages et le moteur d'une dégradation irréversible en cas d'échauffement croissant du moteur. Ce mode de protection contre la surchauffe des bobinages permet, dans le cas des pompes de circulation entraînées par moteur électrique tels que les circulateurs de chauffage équipés de moteurs à rotor noyé, de se protéger également contre une surchauffe du liquide véhiculé par la pompe, car la température des bobinages du moteur est liée directement à la température du fluide véhiculé qui circule au voisinage immédiat de ce bobinage.

Le besoin s'est exprimé récemment de fournir une ou plusieurs indications à distance (téléindications) de la marche des moteurs électriques, en particulier de ceux entraînant des pompes de circulation de fluide de chauffage, pour s'assurer à distance de la bonne marche du moteur électrique. Ces indications concernent notamment:

- la présence ou l'absence d'une tension d'alimentation correcte sur les bobinages du moteur,
- la rotation effective du moteur,
- la température des bobinages du moteur qui, comme on l'a déjà mentionné, permet de surveiller à la fois l'échauffement des bobinages et une surchauffe du fluide de chauffage.

L'établissement des circuits de télésurveillance entre les équipements à surveiller et une unité centrale de surveillance et d'analyse équipée par exemple d'ordinateurs et de moyens d'enregistrement, exige l'installation de nombreux relais et/ou interfaces passant parfois par des lignes téléphoniques publiques. Ces complications conduisent à prévoir un coût d'établissement élevé pour chaque indication à transmettre, ce qui oblige l'exploitant à se limiter souvent à une seule indication dans l'installation de télésurveillance.

DE-B-1 107 338 décrit un dispositif de protection d'un moteur électrique comportant un détecteur de la température du bobinage de ce moteur, apte à se déclencher en cas de dépassement d'une température prédéterminée. Ce détecteur est relié à un relais de coupure de phase en étant interposé sur un circuit de prélèvement de la tension d'alimentation entre phases du moteur.

Un des buts de la présente invention est précisément de permettre à un exploitant de moteur électrique à induction, c'est-à-dire à champs tournants utilisant la télésurveillance, de bénéficier, sur une ligne unique, d'une information d'alerte sur la température des bobinages du moteur électrique et en même temps d'une information d'alerte sur la tension d'alimentation de ce moteur, en utilisant un simple prélèvement de l'une des tensions de phase ou d'entrephase du moteur et sans nécessiter d'isolation particulière à l'égard de la tension prélevée qui, pour certains moteurs, peut atteindre plusieurs milliers de volts.

A cet effet, le détecteur de température est relié, notamment par télé-indication, à l'organe de surveillance via un diviseur de tension d'un circuit de prélèvement de la tension d'alimentation du moteur, ledit diviseur délivrant à un relais ou interface de télésurveillance vers au moins une ligne de transmission une tension réduite inférieure à la tension d'alimentation du moteur, la sortie dudit diviseur de tension émettant soit ladite tension réduite constituant un signal de marche, soit dans le cas du déclenchement du détecteur de température et/ou de la disparition de la tension d'alimentation du moteur, un signal d'absence de tension réduite constituant un signal d'alerte. Il est ainsi par exemple possible de transformer du 380 V triphasé en un signal logique transmis en 220 V monophasé.

Le signal de marche et le signal d'alerte peuvent être transmis simultanément à un organe local de protection, apte à déclencher la coupure de l'alimentation électrique du moteur en cas de présence du signal d'alerte, et à un organe relais de télétransmission des signaux à au moins un poste de télésurveillance.

Selon un autre mode de réalisation du dispositif de surveillance du moteur électrique, ce dispositif comporte un détecteur de rotation du moteur qui adresse un signal de marche ou d'arrêt du moteur à un circuit logique d'alerte et de protection moteur recevant par ailleurs le signal de tension réduite en provenance du diviseur de tension, et ledit circuit logique est apte, en cas de présence simultanée du signal de non rotation du moteur et du signal de tension réduite en provenance du diviseur de tension, à adresser à au moins un organe de surveillance et/ou de sécurité le signal "moteur arrêté sous tension". Le signal d'alerte peut être transmis au réseau de télésurveillance à ligne unique sous la forme d'une disparition de la tension de signal. La disparition du signal de tension est confirmée par le déclenchement d'un disjoncteur temporisé de protection du moteur, ce disjoncteur ne se déclenchant qu'après la persistance du signal "moteur arrêté sous tension" pendant une durée prédéterminée, bien discriminée, du démarrage normal du moteur.

D'autres buts, avantages et caractéristiques apparaîtront à la lecture de la description d'un mode de réalisation de l'invention, faite à titre non limitatif et en regard du dessin annexé où:

- la figure 1 représente schématiquement un dispositif de surveillance selon l'invention d'un moteur électrique d'entraînement de pompe de circulation de fluide de chauffage;
- la figure 2 représente schématiquement un circuit de surveillance et d'alerte de moteur électrique dans une version équipée de modules électroniques intégrés.

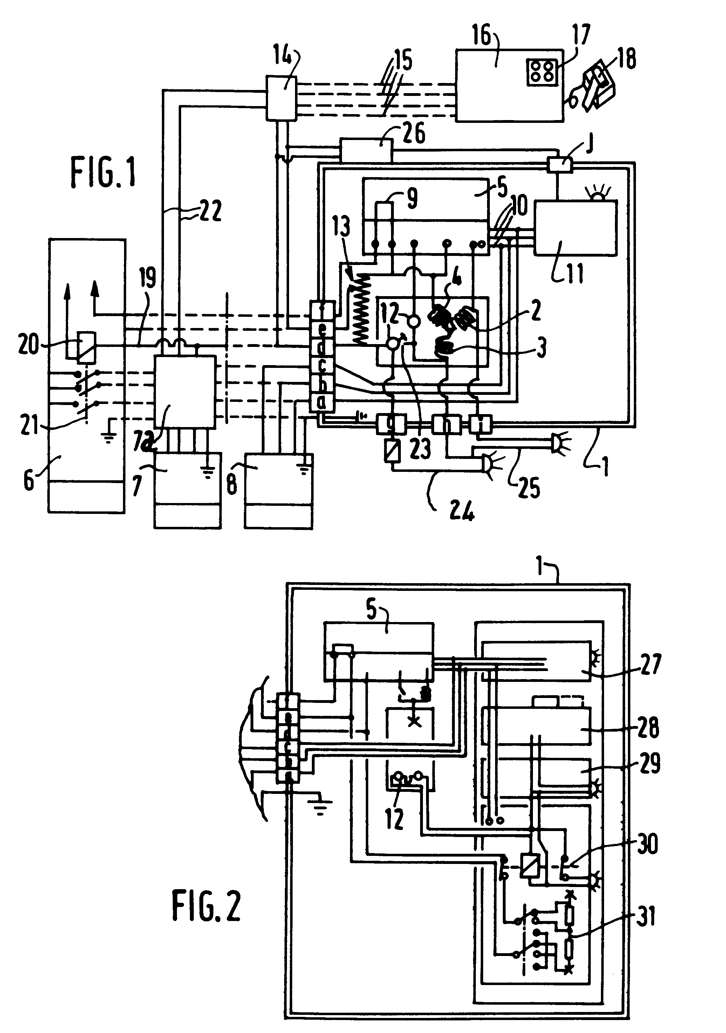

On a représenté sur la figure 1 un moteur électrique d'entraînement de pompe qui comporte à l'intérieur de sa carcasse 1 un stator à bobinages triphasés 2, 3, 4 couplés ici en étoile et reliés à l'intérieur de la carcasse 1 ou du boîtier de carcasse à un boîtier manuel 5 de distribution et de couplage Δ Y et éventuellement de réglage de vitesse. Ce boîtier 5 est connecté au réseau électrique d'alimentation soit via une armoire de commande manuelle et de protection 6, soit via une armoire de commande par télésurveillance (télécommande) 7. Le boîtier 5 présente des prises de pontage 9 et des liaisons par fils 10 le reliant aux phases d'alimentation et à un indicateur 11 de rotation et de sens de rotation (sur la figure on a représenté seulement le détecteur de sens de rotation par repérage de l'ordre de succession des phases).

Le dispositif de surveillance du moteur comporte, à l'intérieur de la carcasse 1, un détecteur 12 de la température des bobinages du moteur électrique 1. Ce détecteur, vendu sous la dénomination commerciale de "Klixon" dans la version utilisée, est logé dans au moins une tête de bobinage électrique ou "chignon" et est susceptible, en cas de dépassement d'une température limite prédéterminée de la tête de bobinage, d'établir ou de couper un contact électrique à l'aide d'un interrupteur de ligne de phase 23 qui peut lui être intégré. On choisit par exemple, dans le mode de réalisation représenté, un détecteur de température capable, en cas de dépassement de la température, de couper le circuit du signal de tension transmettant la tension entre les phases des bobinages 3 et 4.

La liaison avec l'extérieur des équipements portés à l'intérieur de la carcasse 1 du moteur de pompe est réalisée via une ligne de bornes de connexion repérées a à f, les bornes a, b, c étant destinées à recevoir les phases du réseau triphasé d'alimentation de puissance.

Les bornes de connexion d et e reçoivent les prises entre les bobinages de phase 3 et 4 destinées à prélever, via le détecteur de température 12, le signal de tension de surveillance de température. Avant son arrivée aux bornes d et e, un signal à tension trop élevée (par exemple 380 V entre phases) peut être transmis à un diviseur de tension 13 pour constituer par exemple un signal monophasé dérivé en 220 V monophasé. Le signal ainsi fourni par un circuit de prélèvement de tension est adressé à un relais ou interface de télésurveillance 14 alimenté par un coffret de réseau 8 et comportant par exemple un module du type de celui vendu sous la dénomination commerciale "MODEM". Le relais ou interface 14 transmet le signal via les lignes téléphoniques publiques 15 à une centrale de télésurveillance 16 comportant par exemple des voyants 17, un ordinateur de gestion et de surveillance (non représenté) et une imprimante ou autre moyen de mémorisation 18 des défauts et de l'heure à laquelle ils sont survenus. Le signal de tension (en réalité la disparition de la tension de signal) représentant l'alerte de température moteur est transmis par une ligne 19 à un relais 20 de disjoncteur de l'armoire de commande manuelle 6, de manière à faire disjoncter les contacts triphasés 21 et à couper ainsi l'alimentation à partir du réseau en cas de surchauffe du détecteur de température 12. Une armoire de télécommande 7a est reliée à l'armoire 7 et par une ligne 22 au relais 14 pour recevoir, éventuellement depuis la centrale de télésurveillance 16, un ordre d'arrêt ou de remise en marche.

Des bornes supplémentaires g, h, i sont prévues sur la carcasse 1 pour brancher entre g et h un circuit 24 de visualisation de défaut relié au circuit d'alerte de température du bobinage contrôlé par le détecteur 12. Ces bornes supplémentaires permettent de brancher entre h et i un circuit 25 de visualisation de la tension d'alimentation moteur. Une borne supplémentaire j sur la carcasse permet de relier l'indicateur de rotation 11 à un circuit logique 26 (circuit ET) qui reçoit également le signal de tension adressé au relais 14 à partir des bornes e et d. Le circuit logique 26 monté en option à l'extérieur de la carcasse 1 permet de sortir (et d'adresser éventuellement en télésurveillance) l'indication "moteur bloqué sous tension" lorsqu'il reçoit simultanément le signal d'arrêt moteur délivré par l'indicateur 11 et le signal de tension (marche sans défaut) adressé au relais 14 à partir des bornes e et d.

Le fonctionnement du dispositif de surveillance et de télésurveillance va maintenant être explicité.

Lorsque le moteur fonctionne normalement, le détecteur de température 12 n'est pas excité et le signal de tension est adressé via l'interrupteur de ligne de phase 23 au relais 14 qui le transmet téléphoniquement à la centrale de télésurveillance 16 qui affiche sur le voyant 17 un signal vert de bonne marche. Si un échauffement anormal se manifeste sur les bobinages 2, 3, 4 du moteur, le détecteur de température 12 est déclenché ce qui ouvre l'interrupteur de ligne 23 et interrompt le signal de tension adressé au relais 14 qui transmet l'indication de défaut à la central 16 d'où il est visualisé sur un voyant 17 et inscrit sur l'imprimante 18. L'indication de défaut de température est transmise sur la ligne 19 qui fait disjoncter par le relais 20 l'armoire de commande 6. L'alimentation du moteur est coupée et la pompe entraînée par le moteur s'arrête. Le personnel de télésurveillance à la centrale 16 peut décider, après un certain temps d'arrêt, d'adresser par la ligne 22 un ordre de réenclenchement par télécommande (armoire 7a) à l'armoire de commande 7. Si le moteur redémarre correctement après refroidissement de ses bobinages, le voyant 17 correspondant affiche à nouveau une indication de marche.

Il est également possible qu'à la remise en route du moteur électrique, celui-ci soit mis sous tension mais ne démarre pas car son rotor s'est bloqué au cours du refroidissement (ou pour toute autre cause). Les bobinages moteur n'étant pas encore échauffés, le détecteur de température 12 n'est pas excité, l'interrupteur de ligne 23 est fermé et le relais 14 reçoit ainsi un signal de tension correct. Le circuit logique 26 permet de repérer l'incident "rotor bloqué sous tension" qui risque de dégrader les bobinages stator avant que le détecteur de température 12 ne se déclenche pour faire couper l'alimentation moteur, et qui de toute façon correspond à une situation qu'il est utile d'interrompre.

Si au cours de la marche normale de la pompe, la tension du réseau disparaît, le relais 14 reçoit aussitôt un signal d'incident car la tension de signalisation disparaît également entre les bornes e et d. Le relais téléphonique 14 à alimentation indépendante (batteries) continue à transmettre le signal d'alerte ou de défaut, ou bien selon un montage de sécurité la disparition du signal téléphonique déclenche l'alerte. Sans changer le principe et le système de surveillance selon l'invention le moteur asynchrone à bobinages triphasé représenté à la figure 1 peut être remplacé par un moteur asynchrone monophasé à spire de court-circuit ou dont la phase auxiliaire est reliée à un condensateur extérieur.

Le moteur électrique à détection de défaut représenté à la figure 2 comporte, à l'intérieur de sa carcasse 1 raccordée par les mêmes bornes standard a à f, les éléments déjà rencontrés sur le moteur représenté à la figure 1: un stator de moteur électrique avec ses bobinages non représentés, un détecteur 12 de température stator et un boîtier de distribution 5. Selon ce mode de réalisation du moteur électrique, on prévoit en plus, à l'intérieur de la carcasse 1 ou du boîtier de carcasse, des modules électroniques de contrôle et de visualisation compacts et installés à la demande pour repérer et visualiser:

- en 27, la rotation et le sens de rotation du rotor,
- en 28 ou 29, la tension d'alimentation (triphasé 220-380 V, monophasé),
- en 30, l'existence d'un défaut de marche via un relais de maintien de l'alimentation électrique,
- en 31, la sélection du mode de transmission des signaux: la tension utilisée, la mise en oeuvre du diviseur de tension, le mode de transmission par signal de tension ou par absence de tension.

Les bornes a à f étant identiques à celles de la figure 1, la carcasse 1 de moteur représentée à la figure 2 peut se monter en lieu et place de la carcasse 1 représentée à la figure 1 pour être reliée à un circuit externe de détection et de télésurveillance identique à celui de cette figure 1.

Bien entendu, la présente invention n'est pas limitée aux modes de réalisation décrits et représentés, mais elle est susceptible de nombreuses variantes accessibles à l'homme de l'art sans que l'on ne s'écarte de l'esprit de l'invention.

## Revendications

1. Dispositif de télésurveillance du fonctionnement d'un moteur électrique, par exemple pour un groupe motopompe, comportant au moins un détecteur de la température du bobinage (2, 3, 4) de ce moteur apte, en cas de dépassement par au moins une partie de ce bobinage d'une température prédéterminée, à déclencher la mise hors tension de ce moteur, le détecteur de température (12) étant relié, par prélèvement d'une tension du moteur, à un organe de surveillance (14, 15, 16), caractérisé en ce que le détecteur de température (12) est relié à l'organe de surveillance (14, 15, 16) via un diviseur de tension (13) d'un circuit (e, d) de prélèvement de la tension d'alimentation du moteur ledit diviseur délivrant à un relais ou interface (14) de télésurveillance vers au moins une ligne de transmission (15) une tension réduite inférieure à la tension d'alimentation du moteur, la sortie dudit diviseur de tension (13) émettant soit ladite tension réduite constituant un signal de marche du moteur, soit, dans le cas du déclenchement du détecteur de température et/ou de la disparition de la tension d'alimentation du moteur, un signal d'absence de tension réduite constituant un signal d'alerte.

2. Dispositif selon la revendication 1, caractérisé en ce qu'il comporte un détecteur (21) de rotation du moteur qui adresse un signal de marche ou d'arrêt du moteur à un circuit logique (26) d'alerte et de protection moteur recevant par ailleurs le signal de tension réduite en provenance du diviseur de tension (13), et en ce que ledit circuit logique (26) est apte, en cas de présence simultanée du signal de non rotation du moteur et du signal de tension réduite en provenance du diviseur de tension (13), à adresser à au moins un organe de surveillance (16) et/ou de sécurité (20, 21) le signal "moteur arrêté sous tension".

## Claims

1. Device for remotely monitoring the operation of an electric motor, for example for a motor-driven pump unit, comprising at least a detector for the temperature of the winding (2, 3, 4) of said motor adapted, where at least one part of said winding exceeds a predetermined temperature, to initiate the powering down of said motor, the temperature detector (12) being linked, by taking-off of a voltage from said motor, to a monitoring unit (14, 15, 16), characterized in that the temperature detector (12) is linked to the monitoring unit (14, 15, 16) via a voltage divider (13) of a circuit (e, d) for taking off the motor supply voltage, said divider supplying a remote monitoring relay or interface (14) to at least one transmission line (15), with a reduced voltage that is less than the motor supply voltage, the output from said voltage divider (13) supplying either said reduced voltage constituting a signal that said motor is running or, in the case where the temperature detector is triggered and/or of disappearance of the motor supply voltage, a reduced voltage absence signal constituting an alerting signal.

2. Device according to claim 1, characterized in that it includes a motor rotation detector (21) which sends a motor turning or stopped signal to an alerting and motor protection logic circuit (26) which further receives the reduced voltage signal originating from the voltage divider (13), and in that said logic circuit (26) is able, in the case where the motor not-turning signal and the reduced voltage signal originating from the voltage divider (13) are simultaneously present, to send to at least one monitoring unit (16) and/or safety (20, 21) unit the signal "motor stalled under power".

## Patentansprüche

1. Vorrichtung zur Fernsteuerung eines Elektromotors, beispielsweise bei einer Motorpumpe, mit wenigstens einem Fühler zum Messen der Temperatur der Wicklungen (2, 3, 4) des Motors und zum Abschalten desselben wenn wenigstens ein Teil der Wicklungen einen vorbestimmten Temperaturwert überschreitet, wobei der Temperaturfühler (12) mit Entnahme einer Motorenspannung mit einem Kontrollorgan (14, 15, 16) verbunden ist, dadurch gekennzeichnet, dass der Temperaturfühler (12) mit dem Kontrollorgan (14, 15, 16) über einen Spannungsverteiler (13) eines Stromkreises (e, d) zur Motorspeisespannungsentnahme verbunden ist, wobei der Spannungsverteiler an ein Fernsteuerrelais oder eine Zwischenverbindungseinheit (14) nach wenigstens einer Übertragungsleitung (15) eine reduzierte Spannung anlegt, die niedriger ist, als die Speisespannung des Motors, und wobei der Spannungsverteiler (13) an seinem Ausgang entweder die ein Motoreinschaltsignal darstellende reduzierte Spannung oder aber, bei Auslösung des Temperaturfühlers bzw. bei Ausfall der Motorspeisespannung, ein ein Alarmsignal darstellendes, den Ausfall der reduzierten Spannung anzeigendes Signal abgibt.

2. Fernsteuervorrichtung nach Anspruch 1, dadurch gekennzeichnet, dass sie einen Motorumlauf-Fühler (21) aufweist, der ein Motorumlauf- bzw. Stillstandsignal an einen logischen Warn- und Motorschutzstromkreis (26) abgibt, der ferner das vom Spannungsverteiler (13) abgegebene Signal reduzierter Spannung empfängt; und dass bei gleichzeitigem Auftreten des Motorstillstandsignals und des vom Spannungsverteiler (13) abgegebenen Signals reduzierter Spannung der logische Stromkreis (26) an wenigstens ein Kontroll- (16) bzw. Sicherungsglied (20, 21) das Signal "Stillstand des Motors unter Spannung" abgibt.

FIG.1

FIG.2